**Europäisches Patentamt**

**European Patent Office**

**Office européen des brevets**

(19)

(11) Veröffentlichungsnummer: **0 187 292**
**B1**

(12) **EUROPÄISCHE PATENTSCHRIFT**

(45) Veröffentlichungstag der Patentschrift:
**21.09.88**

(21) Anmeldenummer: **85115726.3**

(22) Anmeldetag: **10.12.85**

(51) Int. Cl.⁴: **D 05 C 15/18,** D 05 B 51/00,
D 05 C 11/14

(54) **Optische Fadenrissüberwachungsvorrichtung für Tuftingmaschinen.**

(30) Priorität: **31.12.84 DE 3447869**

(43) Veröffentlichungstag der Anmeldung:
**16.07.86 Patentblatt 86/29**

(45) Bekanntmachung des Hinweises auf die Patenterteilung:
**21.09.88 Patentblatt 88/38**

(84) Benannte Vertragsstaaten:
**BE DE GB IT NL SE**

(56) Entgegenhaltungen:
**EP-A-0 127 796**

(73) Patentinhaber: **Erwin Sick GmbH Optik- Elektronik,
Sebastian- Kneipp- Strasse 1, D-7808 Waldkirch
(DE)**

(72) Erfinder: **Sick, Erwin, Dr., Stifterweg 6, D-8021
Icking (DE)**

(74) Vertreter: **Dipl.- Phys.Dr. Manitz Dipl.- Ing., Dipl.-
Wirtsch. Finsterwald Dipl.- Ing. Grämkow Dipl.-
Chem.Dr. Heyn Dipl.- Phys. Rotermund, Morgan,
B.Sc.(Phys.) Robert- Koch- Strasse 1, D-8000
München 22 (DE)**

LIBER, STOCKHOLM 1988

## Beschreibung

Die Erfindung betrifft eine optische Fadenrißüberwachungsvorrichtung für Tuftingmaschinen nach dem Oberbegriff des Patentanspruchs 1.

Bei einer solchen Fadenrßüberwachungsvorrichtung nach dem Oberbegriff des Anspruches 1, wie sie durch die DE-OS-3 331 772 offenbart ist, besteht das Problem, daß die vor der Maschine arbeitende Bedienungsperson im Falle eines Fadenbruches durch die relativ platzaufwendige Fadenrißüberwachungsvorrichtung bei der erforderlichen Neuansetzung eines gerissenen Fadens behindert wird. Ein weiterer Nachteil der bekannten Vorrichtung besteht darin, daß sie nur einen relativ kurzen Bereich der gesamten Tuftingmaschine, z. B. nur eine Länge von ca. 60 cm, erfassen kann, so daß z. B. zur lückenlosen Überdeckung einer 5 m langen Tuftingmaschine acht derartige vorbekannte Vorrichtungen nebeneinander angeordnet werden müssen, was relativ aufwendig ist.

Die Aufgabe der Erfindung besteht somit darin, eine optische Fadenrißüberwachungsvorrichtung zu schaffen, welche aufgrund eines wesentlich kompakteren Aufbaus einen besseren Zugang zu gerissenen Fäden für die Bedienungsperson gestattet, gleichwohl aber einen exakt der Nadelreihe bzw. dem retroreflektierenden Streifen zugeführten Laserstrahl aussendet und problemlos deutlich länger ausgebildet werden kann, so daß zur Überdeckung einer relativ langen Tuftingmaschine nur merklich weniger Vorrichtungen als bei der vorbekannten Vorrichtung gleicher Gattung angeordnet zu werden brauchen.

Diese Aufgabe wird bei einer Vorrichtung nach dem Oberbegriff des Anspruches 1 durch dessen kennzeichnende Merkmale gelöst.

Der Vorteil der Erfindung besteht darin, daß der Hohlspiegel näher am Feld (Nadelebene) angeordnet ist und dadurch bei gegebenem Gehäusevolumen die Brennweite gesteigert werden kann gegenüber früheren Anordnungen. Außerdem wird der vor der Stachelwalze noch vorhandene freie Raum für den zum Hohlspiegel führenden Strahlengang mit ausgenutzt, was eine weitere Verlängerung der Spiegelbrennweite und damit eine noch stärkere Verbreiterung der Vorrichtung, d.h. Erhöhung der Abtastlänge ermöglicht.

Weitere vorteilhafte und zweckmäßige Ausgestaltungen des Gegenstandes des Anspruches 1 sind in den Unteransprüchen (Ansprüche 2 bis 8) beschrieben.

Insbesondere durch die Ausbildung nach dem Anspruch 7 ist es möglich, mehrere Fadenrißüberwachungsvorrichtungen mit einem einzigen, durch eine Laserquelle erzeugten Laserstrahl zu versorgen.

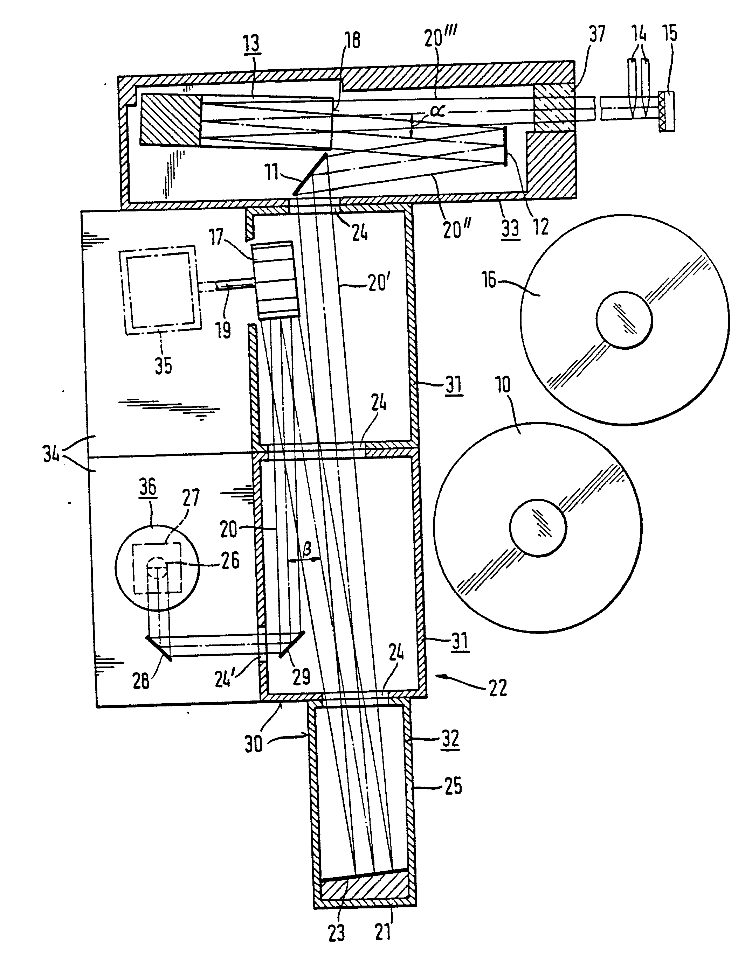

Die Erfindung wird im folgenden beispielsweise anhand der Zeichnung beschrieben, deren einzige Figur einen Querschnitt senkrecht zur Längserstreckung einer an einer Tuftingmaschine angeordneten optischen Fadenrißüberwachungsvorrichtung zeigt.

Nach der Zeichnung ist vor der Spannwalze 10 und der Stachelwalze 16 ein aus drei übereinander angeordneten Strangpreßprofilen 31, 31 und 32 zusammengesetztes Gehäuse 22 mit vertikaler Vorderwand 25 angeordnet, welche einen relativ geringen Abstand von der Spannwalze 10 hat. Die oberen beiden Strangpreßprofile 31 sind gleich ausgebildet und ausgerichtet übereinander angeordnet, wobei in der zwischen ihnen vorhandenen Horizontalwand ein Schlitz 24 für den Strahldurchgang vorgesehen ist. Das untere Strangpreßprofil 32 ist etwas schmaler ausgebildet und weist ebenso wie die untere Wand des darüber befindlichen Strangpreßprofils 31 einen Strahldurchgangschlitz 24 auf. Unten im untersten Strangpreßprofil 32 ist ein Umlenkspiegel 23 angebracht.

Auf der von der Tuftingmaschine abgewandten Seite der etwas breiteren Aluminiumstrangpreßprofile 31 sind kastenförmige Gehäuseteile 34 angebracht, in denen oben der nur gestrichelt angedeutete Motor 35 für das Spiegelrad 17 und unten der Laserstrahl 26 bzw. der Laser 36 angeordnet ist. Der Laserstrahl 26 verläuft horizontal und parallel zur Tuftingmaschine, d.h. senkrecht zur Zeichnungsebene und trifft auf einen teildurchlässigen Ablenkspiegel 27, der einen Teil des Laserstrahls 26 nach unten zu einem Ablenkspiegel 28 umlenkt, der den Laserstrahl horizontal zu einem innerhalb des unteren Strangpreßprofils 31 angeordneten weiteren Ablenkspiegel 29 ablenkt. In der Wand des unteren Strangpreßprofils 31 ist zu diesem Zweck eine Strahldurchtrittsöffnung 24' vorgesehen.

Oben auf dem obersten Strangpreßprofil 31 ist fest ein flachliegendes Aluminiumstrangpreßprofil 33 angeordnet, welches zusammen mit den im wesentlichen vertikal angeordneten Strangpreßprofilen 31, 32 eine T-förmige Anordnung bildet. Mit anderen Worten steht das Strangpreßprofil 33 sowohl in Richtung der Tuftingmaschine als auch von ihr weg über die Strangpreßprofile 31 deutlich vor, jedoch nicht über die Gehäuseteile 34.

Der vom unteren Ablenkspiegel 29 vertikal nach oben gelenkte Laserstrahl 20 trifft auf ein im oberen Strangpreßprofil 31 angeordnetes Spiegelrad 17, dessen Drehachse 19 vom Motor 35 angetrieben wird und in Richtung der Tuftingmaschine geringfügig gegenüber der Horizontalen ansteigt. Hierdurch wird das vom Spiegelrad 17 reflektierte Licht schräg nach unten zum Spiegel 23 umgelenkt, der eine solche Längserstreckung senkrecht zur Zeichnungsebene hat, daß der vom Spiegelrad 17 reflektierte Strahl bei allen Drehpositionen des Spiegelrades 17 noch auf den streifenförmigen Spiegel 23 auftrifft.

Das Spiegelrad 17 befindet sich so weit oben im oberen Strangpreßprofil 31, wie das aufgrund der räumlich-baulichen Anordnung möglich ist, der Planspiegel 23 soweit unten wie möglich, also in Bodennähe.

Das Spiegelrad 17 ist außerdem möglichst nahe an der von der Tuftingmaschine abgewandten Wand des Strangpreßprofils 31 angeordnet, so daß auf der gegenüberliegenden Seite ausreichend Platz für den vom Bodenspiegel 23 schräg nach oben zurückgeworfenen Reflexionsstrahls 20' verbleibt, der durch die Lichtdurchgangsschlitze 24 hindurch auf einen im obersten Strangpreßprofil 33 angeordneten streifenförmigen Umlenkspiegel 11 trifft, dessen Längsachse senkrecht zur Zeichnungsebene verläuft.

Der Umlenkspiegel 11 ist etwa unter einem Winkel von 50° zur Horizontalen angeordnet, so daß er einen etwas schräg nach oben gerichteten Reflexionsstrahl 20'' zu einem Streifenplanspiegel 12 lenkt, der an dem der Tuftingmaschine zugewandten Ende des dort hin vorstehenden Gehäuseteils 33 untergebracht ist. Der Gehäuseteil 33 erstreckt sich etwa bis zum oberen Scheitel der Stachelwalze 16, endet jedoch etwas davor. Die Neigung des Umlenkspiegels 11 ist so gewählt, daß der vom Streifenspiegel 12 reflektierte Strahl knapp oberhalb des Umlenkspiegels 11 vorbeilaufen kann, wo ein streifenförmiger Hohlspiegel 13 mit Endkanten 18 angeordnet ist, welcher das auftreffende Licht in Richtung der nur schematisch angedeuteten Nadelreihe 14 der Tuftingmaschine umlenkt, hinter der ein sich senkrecht zur Zeichnungsebene erstreckender retroreflektierender Streifen 15 angeordnet ist. Der Empfangsstrahlengang ist nicht eingezeichnet und kann ähnlich wie bei der Vorrichtung nach der DE-OS-3 331 772 ausgebildet sein.

Damit der vom Hohlspiegel 13 reflektierte Fahrstrahl 20''' aus dem oberen Hohlprofil 33 an dessen einer Schmalseite austreten kann, ist dort ein Fenster 37 eingebaut.

Aufgrund der relativen Nähe des Spiegelrades 17 und des Hohlspiegels 13 sowie des Senkrechtstehens der Längserstreckung des Hohlspiegels 13 auf der Drehachse 19 werden für einen einwandfreien Strahlverlauf günstige Schwingungsverhältnisse erzielt. Weiter kann aufgrund der speziellen Anordnung von Spiegelrad und Hohlspiegel sowie des doppelten Z-Strahlenganges in den Strangpreßprofilen 31, 32 einerseits und im oberen Strangpreßprofil 33 andererseits ein Hohlspiegel 13 mit relativ großer Brennweite gewählt werden, was es ermöglicht, den Hohlspiegel 13 in Richtung senkrecht zur Zeichnungsebene relativ lang, z. B. 1 m lang, auszubilden. Hierdurch kann die gesamte Vorrichtung relativ breit ausgebildet werden und einen sehr großen Breitenbereich der Tuftingmaschine erfassen. Bei einer 5 m langen Tuftingmaschine brauchen lediglich fünf erfindungsgemäße Vorrichtungen nebeneinander angeordnet zu werden, um die gesamte Nadelreihe 14 optisch zu erfassen.

Dadurch, daß innerhalb des Gehäuses nur ein einfacher Z-Strahlengang enthalten ist, kann die Tiefe des Gehäuses 22 und der davor angeordneten Gehäuseteil 34 kleiner als bei der vorbekannten Vorrichtung gehalten werden, was bedeutet, daß die Bedienungsperson leichter an die Nadelreihe 14 herankommt, um dort gerissene Fäden neu anzusetzen.

Als besonders günstig für eine vor der Maschine sitzende Person erweist sich auch der stufenartige Sprung 30 am unteren Ende, wo gegebenenfalls die Kniee der Bedienungsperson beim Sitzen Platz finden können.

Durch die Unterteilung des Gehäuses 22 in drei übereinander angeordnete Aluminiumstrangpreßprofile 31, 31, 32 und das oben flach aufgesetzte weitere Strangpreßprofil 33 wird insgesamt eine sehr verwindungssteife bauliche Konstruktion erzielt, so daß z. B. bei einer Belastung mit 100 kp auf 5 m nur eine Auslenkung von 1 mm hervorgerufen wird.

Besonders wichtig ist, daß die Lange der Strahlen zwischen dem Spiegelrad 17 und dem Hohlspiegel 23 etwas geringer als die Brennweite des Hohlspiegels 13 ist, damit der vom Hohlspiegel 13 ausgesandte Fahrstrahl 20''' an den Enden der Abtastbewegung etwas nach außen divergiert, was bei der Nebeneinanderanordnung mehrerer derartiger Vorrichtungen wichtig ist, um Abtastlücken zwischen zwei Vorrichtungen zu vermeiden. Aus diesem Grunde soll der Winkel $\alpha$ des Z-Strahlenganges innerhalb des oberen Strangpreßprofils 33 mit etwa 6° um etwa 1/3 geringer sein als der Winkel $\alpha$ des Z-Strahlenganges im Gehäuse 22, welcher 9° beträgt.

Aufgrund der Annäherung des Hohlspiegels 13 an das Abtastfeld, welches durch die Nadelreihe 14 gebildet wird, ist die optische Abbildung des Lichtfleckes in diesem Bereich deutlich verbessert.

Die Anordnung aller optischen Elemente in den Hohlprofilen bringt auch die Möglichkeit einer besseren Abdichtung gegen Verschmutzung mit sich.

Im oberen Bereich der Gehäuseteile 34 sind außer dem Motor 35 für das Spiegelrad 17 auch noch die elektrischen Schaltungsbauteile untergebracht.

**Patentansprüche**

1. Optische Fadenrißüberwachungsvorrichtung für Tuftingmaschinen, bei denen eine Trägerbahn von unten einer Stachelwalze zugeführt und von dieser in einer im wesentlichen horizontalen Richtung umgelenkt wird, um unter einer Nadelreihe hindurchgeführt zu werden, welche zur Bildung von Tuftingware durch Auf- und Abgehen periodisch Fäden in die Trägerbahn einführt, unter Verwendung einer Laserstrahl-Abtastvorrichtung, welche einen bei geöffneten Nadeln unmittelbar unter und hinter den Nadelspitzen, unmittelbar über und im wesentlichen senkrecht zu der Tuftingwarenoberfläche sowie parallel zur Nadelreihe angeordneten schmalen retroreflektierenden Streifen aufweist, welche einen den retroreflektierenden Streifen periodisch abtastenden, im wesentlichen parallel zu dem sich zwischen der Stachelwalze und der Nadelreihe erstreckenden Teil der Trägerbahn und senkrecht zu dem retroreflektierenden Streifen verlaufenden Fahrstrahl als Laserstrahl mittels eines Spiegelrades und eines streifenförmigen Hohlspiegels erzeugt und einen in Autokollimation arbeitenden Lichtempfänger enthält, der an eine Fehlerauswerteelektronik angeschlossen ist, die beim Ausbleiben eines durch die Nadeln bzw. die sich zwischen den Nadeln und der Trägerbahn erstreckenden Fäden bedingten Fahrstrahlunterbrechungssignals ein Fehlersignal abgibt, und welche schließlich vor der Stachelwalze und im wesentlichen unter der Höhe der Nadelreihe vertikal angeordnet ist, wobei ein im wesentlichen in Höhe und parallel zu der Nadelreihe angeordneter streifenförmiger Umlenkspiegel den im wesentlichen vertikal aus der Abtastvorrichtung austretenden Abtaststrahl im wesentlichen in Richtung des retroreflektierenden Streifens umlenkt, dadurch gekennzeichnet, daß der Umlenkspiegel (11) den auftreffenden Laserstrahl etwas schräg nach oben zu einem sich parallel zu ihm erstreckenden Streifenplanspiegel (12) lenkt, welcher den Laserstrahl zu dem oberhalb auf der entgegengesetzten Seite des Umlenkspiegels (11) wie die Nadelreihe (14) angeordneten Hohlspiegel (13) lenkt, der parallel zu und horizontal gegenüber der Nadelreihe (14) angeordnet ist, wobei das Spiegelrad (17) unmittelbar unter dem Umlenkspiegel (11) mit etwas zur Horizontalen gekippter Drehachse (19) angeordnet ist und vertikal von unten den Laserstrahl (20) empfängt, sowie den Laserstrahl im wesentlichen nach unten, jedoch etwas schräg in Richtung der Nadelreihe (14) zu einem am Boden (21) des Gehäuses (22) nahe der der Spannwalze (10) zugewandten Wand (25) angeordneten Streifenumlenkspiegel (23) lenkt, der parallel zum Umlenkspiegel (11) verläuft und den Laserstrahl nach oben am Spiegelrad (17) vorbei zum Umlenkspiegel (11) zurückwirft.

2. Vorrichtung nach Anspruch 1, dadurch gekennzeichnet, daß der Streifenplanspiegel (12) in einem sich bis in die Nähe, jedoch nicht ganz über die Stachelwalze (16) erstreckenden Gehäuseteil (Strangpreßprofil (33)) angeordnet ist.

3. Vorrichtung nach Anspruch 1 oder 2, dadurch gekennzeichnet, daß der Hohlspiegel (13) unmittelbar über dem Umlenkspiegel (11) angeordnet ist.

4. Vorrichtung nach Anspruch 3, dadurch gekennzeichnet, daß die Endkanten (18) des Hohlspiegels (13) im wesentlichen mit der der Nadelreihe (14) zugewandten Oberkante des Umlenkspiegels (11) vertikal ausgerichtet sind.

5. Vorrichtung nach einem der vorhergehenden Ansprüche, dadurch gekennzeichnet, daß der Hohlspiegel (13) eine Länge von 0,8 bis 1,2 m, insbesondere etwa 1 m und eine Brennweite von 0,8 m bis 1,2 m und insbesondere etwa 1 m aufweist, d.h. eine Brennweite gleich seiner Länge aufweist.

6. Vorrichtung nach einem der vorhergehenden Ansprüche, dadurch gekennzeichnet, daß das Spiegelrad (17), der Umlenkspiegel (11), der Streifenplanspiegel (12) und der streifenförmige Hohlspiegel (13) in separaten Aluminiumstranggußprofilen (31, 32, 33) unterbracht sind.

7. Vorrichtung nach einem der vorhergehenden Ansprüche, dadurch gekennzeichnet, daß der Ausgangs-Laserstrahl (26) parallel zur Nadelreihe (14) im Gehäuse (22) im wesentlichen unterhalb des Hohlspiegels (13) verläuft und durch Ablenkspiegel (27, 28, 29) zum Spiegelrad (17) gelenkt wird, sowie mehrere nebeneinander angeordnete gleichartige Vorrichtungen durchläuft und daß in jeder Vorrichtung ein teildurchlässiger Ablenkspiegel (27) vorgesehen ist, der den für die betreffende Vorrichtung benötigten Teil des Laserstrahls (26) auslenkt und den restlichen Teil zu den benachbarten Vorrichtungen weiterlaufen läßt.

8. Vorrichtung nach Anspruch 7, dadurch gekennzeichnet, daß der Laserstrahl (26) etwa in halber Höhe des Gehäuses (22) verläuft und die Tiefe des Gehäuses unterhalb der nahe am Laserstrahl (26) angeordneten Ablenkspiegel (27, 28, 29) über eine Stufe (30) sprungartig verringert ist.

**Claims**

1. Optical thread breakage monitoring apparatus for tufting machines, in which a carrier web is passed from below to a feed roller and is deflected by the latter into a substantially horizontal direction to be passed beneath a row of needles which periodically introduce threads into the carrier web by upward and downward movement for the formation of tufted material, using a laser beam scanning device which has a narrow retroreflecting strip which is arranged immediately beneath and behind the needle tips when the needles are opened, which is arranged immediately above and substantially perpendicular to the surface of the tufted material, and which is arranged parallel to the row of needles; wherein the scanning device generates, by means of a mirror wheel and a strip-like concave mirror, a scanning beam in the form of a laser beam which periodically scans the retroreflecting strip and extends substantially parallel to the part of the carrier web which extends between the feed roller and the row of needles and perpendicular to the retroreflecting strip and extends substantially parallel to the part of the carrier web which extends between the feed roller and the row of needles and perpendicular to the retroreflecting strip, wherein the scanning device contains a light receiver operating in autocollimation which is connected to an electronic fault evaluating circuit which, in the absence of a scanning beam interruption signal brought about by the needles and/or the threads extending between the needles and the carrier web, transmits a fault signal, and wherein the scanning device is finally vertically arranged in front of the feed roller and substantially below the level of the row of needles; and wherein a strip-like deflecting mirror arranged substantially at the level of and parallel to the row of needles deflects the scanning beam which emerges substantially vertically out of the scanning device in the direction of the retroreflecting strip, characterised in that the deflecting mirror (11) deflects the incident laser beam somewhat obliquely upwardly to a strip-like plane mirror (12) extending parallel to it which deflects the laser beam to the concave mirror (13) which is arranged higher up on the opposite side of the deflecting mirror (11) from the needle row (14), with the concave mirror (13) being arranged parallel to and horizontally opposite to the needle row (14); and in that the mirror wheel (17) is arranged directly below the deflecting mirror (11) with its axis of rotation disposed somewhat tilted relative to the horizontal and receives the laser beam (20) vertically from below and also directs the laser beam essentially downwardly, however somewhat obliquely in the direction of the row of needles (14) to a strip-like deflecting mirror (23) arranged at the base (21) of the housing (22) near the wall (25) adjacent the tensioning roller (10), with the strip-like deflecting mirror (23) extending parallel to the deflecting mirror (11) and reflecting the laser beam upwardly past the mirror wheel (17) to the deflecting mirror (11).

2. Apparatus in accordance with claim 1, characterised in that the strip-like plane mirror (12) is arranged in a housing part (extruded section 33) which extends into the vicinity of, however not quite over the feed roller (16).

3. Apparatus in accordance with claim 1 or claim 2, characterised in that the concave mirror (13) is arranged directly above the deflecting mirror (11).

4. Apparatus in accordance with claim 3, characterised in that the end edges (18) of the concave mirror (13) are substantially vertically aligned with the upper edge of the deflecting mirror (11) adjacent the row of needles (14).

5. Apparatus in accordance with one of the preceding claims, characterised in that the concave mirror (13) has a length from 0.8 to 1.2 m, in particular of approximately 1 m, and a focal length of 0.8 m to 1.2 m and in particular of approximately 1 m, i.e. has a focal length equal to its length.

6. Apparatus in accordance with one of the preceding claims, characterised in that the mirror wheel (17), the deflecting mirror (11), the strip-like plane mirror (12) and the strip-like concave mirror (13) are accommodated in separate extruded sections (31, 32, 33).

7. Apparatus in accordance with one of the preceding claims, characterised in that the output laser beam (26) extends parallel to the row of needles (14) in the housing (22), substantially beneath the concave mirror (13) and is deflected by deflecting mirrors (27, 28, 29) to the mirror wheel (17) and also passes through a plurality of like apparatuses which are arranged alongside one another; and in that a partially transmitting deflecting mirror (27) is provided in each apparatus and deflects out the part of the laser beam (26) required for the relevant apparatus and permits the remaining part to pass on to the neighbouring apparatuses.

8. Apparatus in accordance with claim 7, characterised in that the laser beam (26) extends approximately at half the height of the housing (22); and in that the depth of the housing below the deflecting mirrors (27, 28, 29) which are arranged close to the laser beam, is reduced abruptly via a step (30).

## Revendications

1. Casse-fil optique pour des machines à touffeter, dans lesquelles une bande de base est amenée à partir du bas à un cylindre à pointes et est déviée par celui-ci dans une direction essentiellement horizontale afin d'être conduite sous un rang d'aiguilles qui introduit périodiquement des fils dans la bande de base par un mouvement d'aller et retour, pour former des touffes, avec utilisation d'un dispositif de scrutation à faisceau laser qui présente une étroite plage rétroréfléchissante disposée, lorsque les aiguilles sont ouvertes, immédiatement sous et derrière la pointe des aiguilles, immédiatement au-dessus de et essentiellement perpendiculairement à la surface du matériau de touffetage ainsi que parallèlement au rang d'aiguilles, qui produit, au moyen d'une roue à miroirs et d'un miroir creux lamelliforme, un faisceau vecteur sous la forme d'un faisceau laser orienté essentiellement dans une direction sensiblement parallèle à la partie de la bande de base s'étendant entre le cylindre à pointes et le rang d'aiguilles et perpendiculaire à la plage rétroréfléchissante et scrutant périodiquement la plage rétroréfléchissante et qui comprend un récepteur de lumière fonctionnant en auto-collimation qui est raccordé à une électronique d'évaluation des défauts, qui émet un signal de défaut en cas d'absence d'un signal d'interruption du faisceau vecteur par les aiguilles respectivement par les fils s'étendant entre les aiguilles et la bande de base, et qui finalement est disposé verticalement avant le cylindre à pointes et essentiellement sous le niveau du rang d'aiguilles, et où un miroir de renvoi lamelliforme disposé essentiellement à hauteur du et parallèlement au rang d'aiguilles dévie le faisceau de scrutation, sortant en direction sensiblement verticale du dispositif de scrutation, essentiellement en direction de la plage rétroréfléchissante, caractérisé en ce que le miroir de renvoi (11) dévie le faisceau laser incident quelque peu en oblique vers le haut vers un miroir plan (12) qui lui est parallèle, lequel dévie le faisceau laser vers le miroir creux (13) disposé au-dessus sur la face opposée du miroir de renvoi (11) par rapport au rang d'aiguilles (14), celui-ci étant disposé parallèlement à et horizontalement en face du rang d'aiguilles (14), où la roue à miroirs (17) est disposée immédiatement sous le miroir de renvoi (11) avec son axe de rotation (19) légèrement incliné sur l'horizontale, reçoit le faisceau laser (20) verticalement à partir du bas et renvoie le faisceau laser essentiellement vers le bas, mais légèrement en oblique en direction du rang d'aiguilles (14) vers un miroir de renvoi (23) disposé au fond (21) du boîtier (22) à proximité de la paroi (25) tournée vers le cylindre tendeur (10), lequel miroir est orienté parallèlement au miroir de renvoi (11) et renvoie le faisceau laser vers le haut, à côté de la roue à miroirs (17), vers le miroir de renvoi (11).

2. Dispositif suivant la revendication 1, caractérisé en ce que le miroir plan (12) est disposé dans une partie du boîtier (profilé extrudé 33) qui s'étend jusqu'à proximité, mais pas entièrement au-dessus du cylindre à pointes (16).

3. Dispositif suivant la revendication 1 ou 2, caractérisé en ce que le miroir creux (13) est disposé immédiatement au-dessus du miroir de renvoi (11).

4. Dispositif suivant la revendication 3, caractérisé en ce que les bords extrêmes (18) du miroir creux (13) sont orientés sensiblement verticalement avec le bord supérieur, tourné vers le rang d'aiguilles (14), du miroir de renvoi (11).

5. Dispositif suivant l'une ou l'autre des revendications précédentes, caractérisé en ce que le miroir creux (13) présente une longueur de 0,8 à 1,2 m, en particulier d'environ 1 m, et une distance focale de 0,8 à 1,2 m et en particulier d'environ 1 m, c'est-à-dire une distance focale égale à sa longueur.

6. Dispositif suivant l'une ou l'autre des revendications précédentes, caractérisé en ce que la roue à miroirs (17), le miroir de renvoi (11), le miroir plan (12) et le miroir creux lamellaire (13) sont montés dans des profilés séparés en aluminium extrudé (31, 32, 33).

7. Dispositif suivant l'une ou l'autre des revendications précédentes, caractérisé en ce que le faisceau laser initial (26) se déplace dans le boîtier (22) parallèlement au rang d'aiguilles (14) sensiblement sous le miroir creux (13) et est dévié par des miroirs de renvoi (27, 28, 29) vers la roue à miroirs (17) et qu'il traverse plusieurs dispositifs identiques disposés les uns après les autres et en ce que, dans chaque dispositif, il est prévu un miroir de renvoi (27) partiellement transparent qui dévie la partie du faisceau laser (26) nécessaire pour le dispositif concerné et laisse passer la partie restante vers les dispositifs voisins.

8. Dispositif suivant la revendication 7, caractérisé en ce que le faisceau laser (26) est situé environ à mi-hauteur du boîtier (22) et en ce que la profondeur du boîtier est réduite brusquement, par un épaulement (30), en dessous des miroirs de renvoi (27, 28, 29) disposés à proximité du faisceau laser (26).

0 187 292

1